# EUROPÄISCHE PATENTANMELDUNG

(11) **EP 4 335 575 A1**
(43) Veröffentlichungstag der Anmeldung: **13.03.2024**
(21) Anmeldenummer: 23194609.6
(22) Anmeldetag: 31.08.2023
(51) Int. Cl.: B23B 5/16, B23B 31/107

(54) **WERKZEUGHALTER FÜR EINE WERKZEUGMASCHINE**

(30) Priorität: 12.09.2022 DE 102022123128
(71) Anmelder: LEISTRITZ PRODUKTIONSTECHNIK GMBH, 92714 Pleystein (DE)
(72) Erfinder: Vater, Bernhard, 92714 Pleystein (DE); Lehner, Tobias, 92709 Moosbach (DE)
(74) Vertreter: Lindner Blaumeier Patent- und Rechtsanwälte

(57) **Zusammenfassung**

Werkzeughalter für eine Werkzeugmaschine, mit einem um eine Rotationsachse (R) drehbaren Haltebauteil (3), an dem ein Schneidwerkzeug (5) lösbar befestigt oder befestigbar ist, wobei das Haltebauteil (3) wenigstens zwei, in Umfangsrichtung um die Rotationsachse (R) versetzt angeordnete, Einsteckaufnahmen (4) zur Aufnahme je eines einen länglichen Einsteckschafts (6) und einen Schneidabschnitt (8) aufweisenden Schneidwerkzeugs (5) aufweist, wobei jedes Schneidwerkzeug (5) über ein separates Haltemittel (19) in der Einsteckaufnahme (4) fixiert oder fixierbar ist, und wobei die Schneidwerkzeuge (5) zwischen sich einen Aufnahmeraum (9) für ein von den Schneidwerkzeugen (5) gemeinsam zu bearbeitendes Werkstück begrenzen und mit ihren Schneidabschnitten (8) dem Aufnahmeraum (9) zugewandt sind.

## Beschreibung

Die Erfindung betrifft einen Werkzeughalter für eine Werkzeugmaschine, mit einem um eine Rotationsachse drehbaren Haltebauteil, an dem ein Schneidwerkzeug lösbar befestigt oder befestigbar ist.

Werkzeughalter kommen an unterschiedlichsten Werkzeugmaschinen zum Einsatz. Häufig ist der Werkzeughalter in seiner Montagestellung um eine Rotationsachse drehbar, wozu er seitens der Werkzeugmaschine mit einem Antriebsmittel gekoppelt ist, das um eine Rotationsachse rotiert, um die auch der Werkzeughalter rotiert. Der Werkzeughalter weist einerseits ein Haltebauteil auf, über das er mit der Werkzeugmaschine respektive dem dortigen Drehantrieb gekoppelt ist, wobei hierzu verschiedene Schnittstellen wie beispielsweise eine HSK-Schnittstelle (HSK = Hohlschaftkegel) oder eine SK-Schnittstelle (SK = Steilkegel) vorgesehen ist. Am Haltebauteil selbst ist das Schneidwerkzeug befestigt, über das ein Werkstück spanabhebend bearbeitet werden soll. Ein Anwendungsbeispiel eines solchen Werkzeughalters respektive einer hierüber durchführbaren Bearbeitung ist eine oberflächliche Bearbeitung länglicher zylindrischer Metallgegenstände durch spanabhebendes Überdrehen. Durch dieses Überdrehen wird der längliche Metallgegenstand einerseits auf den gewünschten Durchmesser eingestellt, anderseits kann auch eine gewünschte Oberflächenbeschaffenheit bzw. Oberflächengüte über dieses spanabhebende Überdrehen eingestellt werden. Ein Beispiel für derartige längliche Werkstücke oder Metallteile sind Stecker bzw. Kontaktstifte für elektrische Steckverbindungen. Diese Stecker bzw. Kontaktstifte sind mitunter sehr dünn, sie weisen häufig einen Durchmesser von nur wenigen Millimetern auf. Zum Überdrehen werden die länglichen Metallteile bisher auf einer Drehbank bearbeitet. Das eingespannte Metallteil rotiert, das Überdrehen wird mit einem seitlich an das Metallteil herangefahrenen und längs des Metallteils bewegten Schneidwerkzeugs vorgenommen. Hierbei ist extrem vorsichtig zu agieren, da bei zu hohem seitlichem Druck durch das Schneidwerkzeug die Gefahr eines seitlichen Ausbiegens des Metallteils besteht. Dieses Problem wird umso größer, je dünner der Metallgegenstand ist.

Der Erfindung liegt das Problem zugrunde, einen Werkzeughalter zum Bearbeiten von Werkstücken anzugeben, das demgegenüber verbessert ist, und das insbesondere ein einfaches und sicheres Überdrehen eines länglichen Werkstücks ermöglicht.

Zur Lösung dieses Problems ist bei einem Werkzeughalter der eingangs genannten Art erfindungsgemäß vorgesehen, dass das Haltebauteil wenigstens zwei, in Umfangsrichtung um die Rotationsachse versetzt angeordnete, Einsteckaufnahmen zur Aufnahme je eines einen länglichen Einsteckschaft und einen Schneidabschnitt aufweisenden Schneidwerkzeugs aufweist, wobei jedes Schneidwerkzeug über ein separates Haltemittel in der Einsteckaufnahme fixiert oder fixierbar ist, und wobei die Schneidwerkzeuge zwischen sich einen Aufnahmeraum für ein von den Schneidwerkzeugen gemeinsam zu bearbeitendes Werkstück begrenzen und mit ihren Schneidabschnitten dem Aufnahmeraum zugewandt sind.

Der erfindungsgemäße Werkzeughalter zeichnet sich durch ein Haltebauteil aus, an dem zwei separate Schneidwerkzeuge positionsgenau festgelegt und fixiert werden können, mittels denen gemeinsam und simultan ein zwischen ihnen aufgenommenes längliches Werkstück bearbeitet, also beispielsweise überdreht, werden kann. Hierzu weist das Haltebauteil zwei separate Einsteckaufnahmen auf, wobei in jede Einsteckaufnahme ein Schneidwerkzeug mit einem schneidwerkzeugseitig vorgesehenen, länglichen Einsteckschaft eingesteckt werden kann. Der Einsteckschaft wird über ein geeignetes Haltemittel fest am Haltebauteil fixiert, so dass jedes Schneidwerkzeug positionsfest ist und sich während der Werkstückbearbeitung nicht aus seiner Arbeitsposition bewegt. Dabei sind die wenigstens zwei Einsteckaufnahmen, auf einem gemeinsamen Teilkreis liegend, in Umfangsrichtung um die Rotationsachse, um die der Werkzeughalter rotiert, vorzugsweise äquidistant versetzt angeordnet. Bei zwei Einsteckaufnahmen liegen diese also einander diametral gegenüber und sind, da die Schneidwerkzeuge bevorzugt identisch ausgeführt sind, ebenfalls identisch ausgeführt. Die beiden Werkzeuge rotieren demzufolge symmetrisch um die Rotationsachse, sind jedoch in Umfangsrichtung entsprechend versetzt.

Von dem jeweiligen Einsteckabschnitt erstreckt sich ein vorzugsweise länglicher Werkzeugabschnitt, an dem ein Schneidabschnitt vorgesehen ist, über den die spanabhebende Bearbeitung des Werkstücks erfolgt. Da die beiden Werkstücke in Umfangsrichtung voneinander und radial zur Rotationsachse beabstandet sind, ergibt sich zwischen ihnen folglich ein Aufnahmeraum, in dem das zu bearbeitende Werkstück für die Bearbeitung aufgenommen wird, das heißt, das Werkstück taucht zwischen die beiden Schneidwerkzeuge respektive deren Schneidabschnitte ein. Denn die Schneidabschnitte sind dem Aufnahmeraum, den sie begrenzen, zugewandt. Im Rahmen der Bearbeitung wird das positionsfeste Werkstück demzufolge simultan von den wenigstens zwei rotierenden Schneidwerkzeugen respektive Schneidabschnitten spanabhebend bearbeitet, was natürlich der Bearbeitungsgeschwindigkeit zuträglich ist. Darüber hinaus stützen sich die wenigstens zwei Schneidwerkzeuge respektive Schneidabschnitte auch gemeinsam an dem Werkstück ab, im Falle von zwei Schneidwerkzeugen diametral einander gegenüberliegend, im Falle von mehreren Schneidwerkzeugen je nach Anzahl und vorzugsweise äquidistanter Winkelteilung. Das heißt, dass keine seitlichen Kräfte auf das Werkstück während der Bearbeitung aufgebracht werden, resultierend aus der symmetrischen Schneidwerkzeugabstützung am Werkstück, was eine Biegebeanspruchung des Werkstücks vorteilhaft vermeidet.

Zur Positionierung der wenigstens zwei Werkzeuge werden diese auf einfache Weise in die jeweilige Einsteckaufnahme mit ihrem Einsteckschaft gesetzt, wobei die Einsteckaufnahme bodenseitig geschlossen ist, so dass der Einsteckschaft gegen den Aufnahmeboden läuft. Anschließend ist es lediglich noch erforderlich, die Schneidwerkzeuge über das Haltemittel entsprechend zu fixieren. Das heißt, dass einerseits ein einfaches Bestücken möglich ist, andererseits aber gleichermaßen einfach ein Schneidwerkzeugwechsel.

Minimal sind zwei Einsteckaufnahmen und damit Schneidwerkzeuge vorgesehen, die vorzugsweise um 180° in Umfangsrichtung versetzt angeordnet sind.

Bevorzugt jedoch sind drei, vorzugsweise äquidistant um 120° in Umfangsrichtung versetzt angeordnete, Einsteckaufnahmen oder vier, vorzugsweise äquidistante um 90° in Umfangsrichtung versetzt angeordnete, Einsteckaufnahmen vorgesehen, und natürlich entsprechende Schneidwerkzeuge. Das heißt, dass dementsprechend das Werkstück simultan mit drei oder vier Schneidwerkzeugen, die sich bei symmetrischer Teilung allesamt symmetrisch respektive unter symmetrischer Kraftverteilung am dazwischen aufgenommenen Werkstück abstützen, erfolgt. Neben einer symmetrischen Teilung von z.B. 120° oder 90° ist es auch denkbar, eine unsymmetrische Teilung vorzusehen. Grundsätzlich ist auch die Ausbildung von mehr als vier Einsteckaufnahmen und damit Anordnung von mehr als vier Schneidwerkzeugen denkbar, dies jedoch setzt einen entsprechend zunehmenden Teilkreisdurchmesser, auf dem die Schneidwerkzeuge angeordnet sind, voraus, wie sich natürlich dann auch ein entsprechend größerer Aufnahmeraum zur Bearbeitung von im Durchmesser größeren Werkstücken ergibt.

In Weiterbildung der Erfindung kann jede Einsteckaufnahme über wenigstens einen Spannabschnitt begrenzt sein, gegen den der Einsteckschaft des jeweiligen Schneidwerkzeugs über das Haltemittel gespannt oder spannbar ist. Die Einsteckaufnahme ist also mit wenigstens einem spezifischen Spannabschnitt ausgerüstet respektive bildet einen solchen aus, gegen den der Einsteckschaft quasi radial zur Rotationsachse gespannt wird, an dem er also über das Haltemittel festgelegt wird. Über diesen jeweiligen Spannabschnitt wird die entsprechende finale Schneidwerkzeugposition definiert, so dass mit Spannanlage jedes Einsteckschafts am Spannabschnitt automatisch jedes Schneidwerkzeug exakt positioniert ist und demzufolge auch die entsprechenden Schneidabschnitte, eine zusätzliche Justierung oder Positionierung ist nicht erforderlich. Vielmehr erfolgt diese automatisch durch das primär radiale Festspannen jedes Einsteckschafts über das jeweilige Haltemittel gegen den Spannabschnitt.

Gemäß einer vorteilhaften Weiterbildung der Erfindung kann vorgesehen sein, dass die Einsteckaufnahmen zur Rotationsachse hin unter Bildung einer gemeinsamen Vertiefung ineinander übergehen. Jede Einsteckaufnahme ist zwangsläufig in Form einer entsprechenden Ausnehmung am Haltebauteil, die in die Stirnseite des Haltebauteils eingebracht ist, ausgeführt. Gemäß dieser Erfindungsausgestaltung gehen die beiden oder die mehreren Einsteckaufnahmen in eine gemeinsame Vertiefung über, sie sind also zueinander hin offen, so dass sich eine zentrale Vertiefung oder Ausnehmung ausbildet. Diese Ausnehmung ist letztlich pro Einsteckaufnahme radial erweitert, wobei in die jeweilige Einsteckaufnahme der jeweilige Einsteckschaft eingreift. Die Vertiefung ist also zur Ausbildung der jeweiligen Einsteckaufnahme mit einer radialen Erweiterung zur Außenseite des Haltebauteils hin versehen.

Dabei ist bevorzugt der Querschnitt der Erweiterung formkompatibel zu einem Querschnittsabschnitt des Schneidwerkzeugs bzw. des Einsteckschafts. Dass heißt, dass der Querschnitt der Erweiterung, über den eine Einsteckaufnahme zumindest teilweise ausgebildet wird, formkompatibel, also formgleich zu einem Querschnittsabschnitt des Einsteckschafts ist, beide weisen also eine formkompatible Geometrie auf. Bevorzugt ist ein minimales Spiel von wenigen einhundertstel Millimetern zwischen Einsteckschaft und Einsteckaufnahme respektive der Erweiterung gegeben, so dass ein sehr enger Sitz des Einsteckschafts in der Einsteckaufnahme gegeben ist. Dieser enge Sitz respektive dieses minimale Spiel erlaubt nur eine minimale Radialbewegung, über die der jeweilige Einsteckschaft mittels des Haltemittels radial gegen den Stützabschnitt gespannt wird. Das heißt, dass mit dem Einsetzen des Einsteckschafts in die jeweilige Einsteckaufnahme und aufgrund der Formkompatibilität mit dem minimalen Spiel bereits eine nahezu vollständige Positionsjustage gegeben ist, die durch das Verspannen mittels des Haltemittels finalisiert wird, indem der Einsteckschaft, das geringe Spiel überbrückend, gegen den Spannabschnitt gespannt wird.

Bevorzugt ist dabei jede radiale Erweiterung über einen Bohrungsabschnitt gebildet, wobei jeder Bohrungsabschnitt sich bevorzugt über mehr als 180° erstreckt und die Endkanten jeder Bohrung die Spannabschnitte, gegen die der jeweilige, mit dem Bohrungsabschnitt im Querschnitt formkompatible Einsteckschaft über das Haltemittel spannbar ist, bilden. Die gemeinsame Vertiefung wird also über eine der Anzahl an zu fixierenden Schneidwerkzeugen entsprechende Anzahl an einzelnen Bohrungen gebildet, die einander überlappen. Sollen zwei Schneidwerkzeuge befestigt werden, so werden zwei Bohrungen eingebracht, die einander überlappen, so dass sich eine gemeinsame Vertiefung mit einer Querschnittsform nach Art einer "8" ergeben. Werden drei Bohrungen eingebracht, so überlappen diese sich ebenfalls unter Ausbildung einer entsprechenden, drei rundliche Erweiterungen aufweisenden Vertiefungsgeometrie, bei vier Bohrungen einer vier rundliche Erweiterungen aufweisenden Geometrie, etc.. Dabei können die Bohrungen derart positioniert sein, dass sie, gesehen im Querschnitt der Vertiefung, jeweils einen Umschlingungswinkel des Einsteckschafts von mehr als 180° aufweisen. Der im Querschnittsabschnitt ebenfalls rundliche respektive teilzylindrische Einsteckschaft ist demzufolge in der teilkreisartigen Bohrung umschlungen aufgenommen. Die über die 180° hinausgehenden Bohrungsabschnitte, also die Endkanten des jeweiligen Bohrungsabschnitts, bilden dabei die Spannabschnitte, gegen die der jeweilige Einsteckschaft gespannt wird. Hierüber wird sichergestellt, dass jeder Einsteckschaft symmetrisch an zwei Stellen verspannt wird.

Alternativ zur Ausbildung von Umschlingungswinkeln > 180° und der Bildung der sich hieraus ergebenden Spannabschnitte ist es denkbar, an jedem Einsteckschaft eine oder zwei unter einem Winkel zueinander stehende Stützflächen vorzusehen, über die die Einsteckschäfte in der Montagestellung radial gegeneinander verspannt und abgestützt sind. Über die planen Stützflächen liegen folglich die Einsteckschäfte direkt aneinander an, wobei bei mehr als zwei zu spannenden Schneidwerkzeugen stets zwei solcher Stützflächen, die jeweils unter einem gleichen Winkel zueinander stehen (bei drei Schneidwerkzeugen unter 120°, bei vier Schneidwerkzeugen unter 90° etc., so dass sich jeweils eine gleiche Teilung ergibt) vorzusehen sind. Hierüber erfolgt quasi eine Selbstzentrierung bzw. Ausrichtung hei der Montage bzw. dem Verspannen, insbesondere als, wie beschrieben, das Spiel jedes Einsteckschafts nur minimal ist.

Wie beschrieben, wird jedes Schneidwerkzeug respektive jeder Einsteckschaft über ein separates Haltemittel fixiert. Hierzu kann in Weiterbildung der Erfindung am Haltebauteil eine der Anzahl an Einsteckaufnahmen entsprechende Anzahl an Gewindebohrungen vorgesehen sein, die jeweils an einer Außenfläche des Haltebauteils und einer Einsteckaufnahme münden, und in die jeweils ein Haltemittel in Form einer gegen den Einsteckschaft laufenden Halteschraube eingeschraubt oder einschraubbar ist. Die Verspannung jedes Einsteckschafts erfolgt also über eine entsprechende Halteschraube, was eine sehr einfache Fixierung erlaubt, zumal, wie vorstehend beschrieben, der Einsteckschaft nur mit einem minimalen Spiel von wenigen hundertstel oder zehntel Millimetern in der Einsteckaufnahme beweglich ist, so dass auch für das Verspannen nur eine minimale Halteschraubenbewegung erforderlich ist.

Dabei verläuft bevorzugt jede Gewindebohrung unter einem Winkel < 90° zur Rotationsachse. Das heißt, dass die Zentralachse der Gewindebohrung schräg zum Boden der Einsteckaufnahme respektive der gemeinsamen Vertiefung läuft. Dies führt dazu, dass der Einsteckschaft und damit das Schneidwerkzeug über die Halteschraube eine Axialkraft aufgrund des schrägen Anschraubens erfährt, welche Axialkraft den Einsteckschaft gegen den Boden der Einsteckaufnahme respektive der gemeinsamen Vertiefung drückt. Das heißt, dass hierüber der Einsteckschaft und damit das Schneidwerkzeug nicht nur radial gegen den oder die Spannabschnitte der Einsteckaufnahme oder alternativ gegen den oder die benachbarten Einsteckschäfte bzw. Stützflächen gespannt wird, sondern auch axial gegen den Boden der Einsteckaufnahme.

Dabei kann an jedem Einsteckschaft eine ebene Anlauffläche vorgesehen sein, gegen die die Halteschraube senkrecht anläuft. Diese Anlauffläche kann, wenn die Gewindebohrung senkrecht zur Rotationsachse erfolgt, ebenfalls parallel zur Rotationsachse verlaufen. Bevorzugt jedoch verläuft wie beschrieben die Gewindebohrung unter einem Winkel < 90° zur Rotationsachse, so dass dementsprechend auch die Anlauffläche unter einem entsprechenden Winkel steht. Wird die jeweilige Halteschraube nun senkrecht auf die Anlauffläche geschraubt, so kann hierüber und durch die resultierende Axialverspannung jedwede axiale Positionsbewegung ausgeschlossen werden, da die Halteschraube über die schräg stehende Anlauffläche abgestützt ist.

Weiterhin kann jede Gewindebohrung an der Außenfläche an einer ebenen Einschraubfläche münden. Dies vereinfacht das Einbringen der Gewindebohrung in das Haltebauteil. Jede Gewindebohrung ist bevorzugt eine Senkbohrung, so dass der jeweilige Schraubenkopf versenkt werden kann.

Wie beschrieben, kann der erfindungsgemäße Werkzeughalter respektive können die darin vorgesehenen Schneidwerkzeuge zur Durchführung verschiedenartiger spanabhebender Arbeiten ausgelegt sein. Besonders bevorzugt jedoch sind die Schneidabschnitte der Schneidwerkzeuge zum Überdrehen eines stiftartigen Werkstücks zur Ausbildung einer zylindrischen Werkstückoberfläche ausgebildet. Hierzu kann jeder Schneidabschnitt den eigentlichen Schneidbereich sowie einen daran anschließenden, unter einem geringen Winkel zur Rotationsachse stehenden Auslaufabschnitt aufweisen, das heißt, dass die jeweilige Schneide, vom Einzug her gesehen, zunächst den eigentlichen Schneidbereich aufweisen, der sich sodann marginal unter einem Winkel von 0,2° - 1°, vorzugsweise von ca. 0,5° im Auslaufabschnitt erweitert, worüber ein Verklemmen des Schneidwerkzeugs respektive der mehreren Schneidwerkzeuge am Werkstück vermieden wird.

Neben dem Werkzeughalter selbst betrifft die Erfindung eine Werkzeugmaschine, umfassend eine Antriebseinrichtung mit einem um eine Rotationsachse drehbaren Aufnahmemittel sowie einen in dem Aufnahmemittel aufgenommenen oder aufnehmbaren Werkzeughalter der vorstehend beschriebenen Art, dessen Rotationsachse mit der Rotationsachse des Aufnahmemittels zusammenfällt. Das Aufnahmemittel kann eine beliebige Schnittstelle wie beispielsweise eine HSK- oder SK-Schnittstelle aufweisen, das Haltebauteil weist natürlich eine entsprechende kompatible Schnittstellengeometrie auf.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Perspektivansicht eines erfindungsgemäßen Werkzeughalters umfassend ein Haltebauteil sowie daran festgelegte Schneidwerkzeuge,
- Fig. 2: eine Seitenansicht des Haltebauteils,
- Fig. 3: eine Vorderseitenansicht in Richtung des Pfeils III aus Fig. 2,
- Fig. 4: eine Schnittansicht in Richtung der Linie IV - IV aus Fig. 3,
- Fig. 5: eine Schnittansicht durch das Haltebauteil entlang der Linie V - V aus Fig. 2 mit eingesetzten Schneidwerkzeugen,
- Fig. 6: eine Seitenansicht eines Schneidwerkzeugs,
- Fig. 7: eine Ansicht des Schneidwerkzeugs aus Fig. 6 in Richtung des Pfeils VII,
- Fig. 8: eine Aufsicht auf drei sich in der Einsetzstellung befindliche Schneidwerkzeuge ohne Haltebauteil,
- Fig. 9: eine perspektivische Teilansicht dreier Schneidwerkzeuge unter Darstellung der Halteschrauben,
- Fig. 10: eine Prinzipdarstellung der Anordnung zweier Schneidwerkzeuge, jeweils bezogen auf deren Einsteckschäfte,
- Fig. 11: eine Prinzipdarstellung von vier Schneidwerkzeugen, jeweils bezogen auf deren Einsteckschäfte, und
- Fig. 12: eine Prinzipdarstellung von fünf Schneidwerkzeugen, jeweils bezogen auf deren Einsteckschäfte.

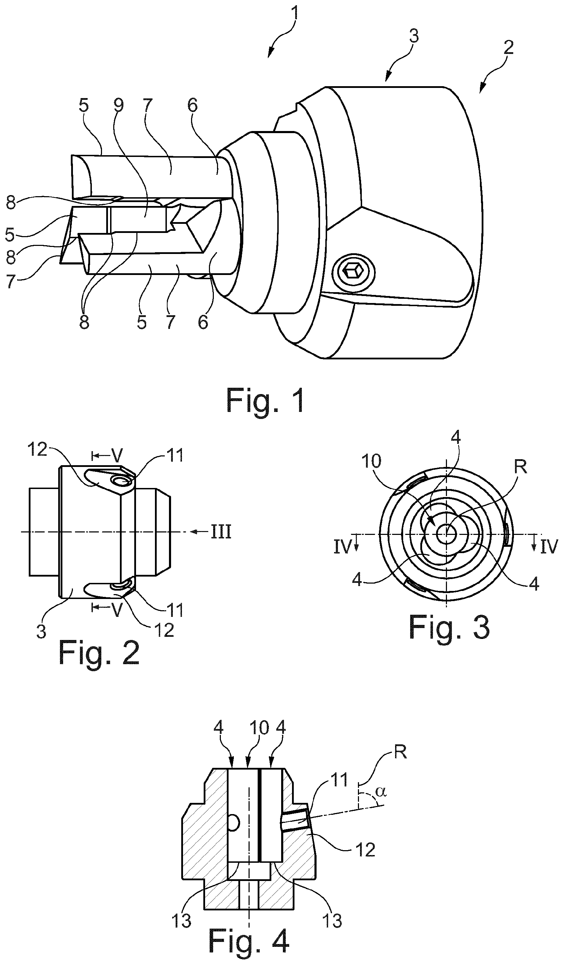

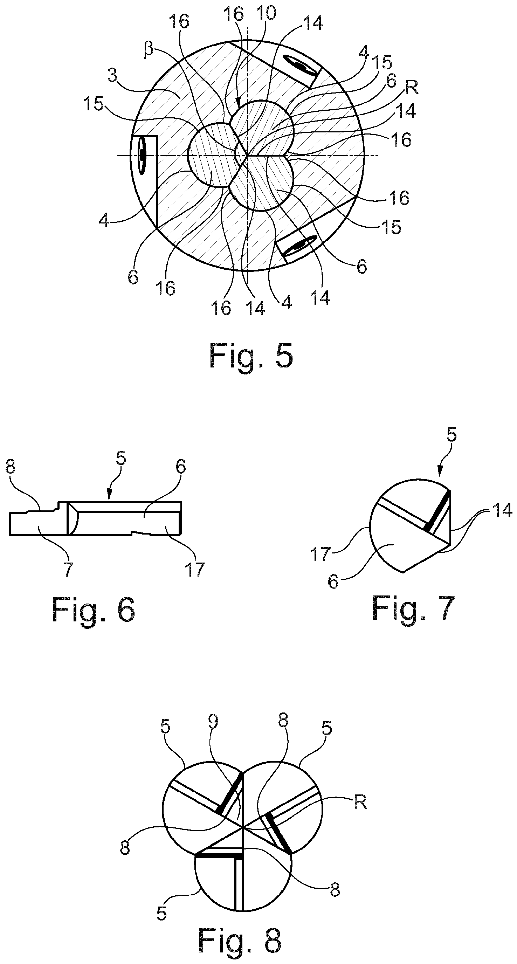

Fig. 1 zeigt einen erfindungsgemäßen Werkzeughalter 1, der über eine entsprechend ausgelegte Befestigungsschnittstelle 2, beispielsweise eine HSK- oder SK-Kupplung, mit einer Halteraufnahme einer Antriebseinheit einer Werkzeugmaschine in an sich bekannter Weise zu verbinden ist. Der Werkzeughalter 1 umfasst ein Haltebauteil 3, an dem die Montageschnittstelle 2 vorgesehen ist. Am Haltebauteil 3, das, siehe Fig. 3, um eine zentrale Rotationsachse R in der Montagestellung drehbar ist, sind im gezeigten Beispiel insgesamt vier separate Einsteckaufnahmen 4 vorgesehen, in die jeweils ein Schneidwerkzeug 5 mit einem Einsteckschaft 6 (siehe hierzu auch die Figuren 5, 6 und 9) eingesetzt und über ein geeignetes Haltemittel fixiert ist. Die Halteaufnahmen 4 sind in Umfangsrichtung auf einem gleichen Teilkreis liegend und im gezeigten Beispiel äquidistant um die Rotationsachse R verteilt angeordnet, so dass folglich eine 120°-Teilung gegeben ist. Dabei weist jedes Schneidwerkzeug 5 einen an den Einsteckabschnitt anschließenden Schneidfortsatz 7 auf, an dem jeweils ein Schneidabschnitt 8 in Form einer Schneidkante ausgebildet ist. Die Schneidabschnitte 8, also die Schneidkanten, sind voneinander beabstandet und begrenzen zwischen sich einen Aufnahmeraum 9, in den ein stift- oder zapfenartiges, zu bearbeitendes Werkstück eingeführt wird, so dass es über die Schneidabschnitte 8, also die Schneidkanten, spanabhebend bearbeitet, insbesondere überdreht werden kann.

Wie die Figuren 2 und 3 zeigen, ist das Haltebauteil 3 an seiner Stirnseite mit einer entsprechenden Vertiefung 10 versehen, wobei diese Vertiefung 10 mittels dreier separater Bohrungen gebildet ist, wobei sich diese Bohrungen, die um 120° äquidistant um die Rotationsachse R versetzt sind, überlappen, so dass sich die in Fig. 3 gezeigte Vertiefungsform ergibt. Die Einsteckaufnahmen 4 sind dabei abschnittsweise über entsprechende radiale Erweiterungen, im Querschnitt zwangsläufig, weil aus der jeweiligen Bohrung resultierend, rundlich, gebildet. In jede dieser rundlichen Einsteckaufnahmen 4 wird ein, was die rundliche Form der radialen Erweiterungen angeht, entsprechend formkompatibel ausgeführter Einsteckschaft 6 eingesteckt, so dass sich eine Art Formschluss ergibt. Zum Zentrum der gemeinsamen Vertiefung 10 hin sind, worauf nachfolgend noch eingegangen wird, die Einsteckabschnitte entsprechend ebenflächig ausgeführt, so dass sich auch dort näherungsweise ein Formschluss ergibt.

In jeder Einsteckaufnahme 4 mündet eine Gewindebohrung 11, die an der Außenseite des Haltebauteils 3 und dort an einer ebenen Einschraubfläche 12 mündet. Dabei verläuft jede Gewindebohrung 11, siehe insbesondere Fig. 4, unter einem Winkel α zur Rotationsachse R, die in Fig. 4 nur angedeutet ist, wobei α < 90° ist. Das heißt, die Längsachse jeder Gewindebohrung 11 ist leicht geneigt und läuft jeweils auf einen Boden 13 einer jeden Einsteckaufnahme 4 zu, was dazu führt, dass jeder Einsteckschaft 6 und damit jedes Schneidwerkzeug 5 durch das Einschrauben der nachfolgend noch beschriebenen Halteschrauben eine axiale Verspannung gegen den jeweiligen Boden 13 der jeweiligen Einsteckaufnahme 4 erfährt.

Fig. 5 zeigt eine Schnittansicht durch das Haltebauteil 3 in Richtung der Linie V - V in Fig. 2, wobei hier die eingesetzten Schneidwerkzeuge 5 respektive Einsteckschäfte 6 dargestellt sind. Gezeigt ist zum einen die gemeinsame Vertiefung 10 sowie die entsprechenden Einsteckaufnahmen 4, jeweils definiert über die jeweiligen radialen Erweiterungen. Ersichtlich sind die Einsteckaufnahmen 4 über separate, axial verlaufende Bohrungen gebildet, die zur Bildung der gemeinsamen Vertiefung 10 einander überlappen. Gezeigt sind des Weiteren die jeweiligen Einsteckschäfte 6 der drei aufgenommenen Schneidwerkzeuge 5, wobei ersichtlich ist, dass sich zu den rundlichen Erweiterungen jeweils eine Formschlussgeometrie ergibt. Zur Rotationsachse R hin weist jeder Einsteckschaft 6 zwei entsprechende Flächen 14 auf, die zwischen sich einen Winkel β von 120° einschließen, wie in Fig. 5 angedeutet ist.

Fig. 5 zeigt ferner, dass jede Einsteckaufnahme 4 mit ihrer rundlichen Erweiterung den jeweiligen Einsteckschaft 6 um einen Winkel > 180° umschlingt. Das heißt, dass jeder Einsteckschaft 6 um mehr als 180° von der jeweiligen Bohrungswandung der jeweiligen Einsteckaufnahme 4 um mehr als 180° umgriffen ist. Jede über einen entsprechenden Bohrungsabschnitt 15 (entsprechend einer Erweiterung) gebildete Einsteckaufnahme 4 weist demzufolge zwei Endkanten 16 auf, die als Spannabschnitte dienen, gegen die jeder Einsteckschaft 6 über die jeweilige Halteschraube radial gespannt wird. Das heißt, dass die Endkanten 16 entsprechende Spannabschnitte bilden, resultierend aus der Umschlingung um mehr als 180°, über die auf einfache Weise radiale Spannabschnitte realisiert werden können. Jeder Einsteckschaft 6 ist in der jeweiligen Einsteckaufnahme 4 mit minimalem Spiel von bevorzugt wenigen einhundertstel Millimetern aufgenommen, so dass ein einfaches axiales Einsetzen aufgrund des geringen Spiels möglich ist, gleichzeitig aber auch eine komplette positionsfeste Verspannung auf sehr einfache Weise über eine jeweilige Halteschraube möglich ist, da nur ein minimales Spiel zu den jeweiligen Endkanten 15, also den Spannabschnitten, zum Verspannen zu überbrücken ist.

Die Figuren 6 und 7 zeigen jeweils ein Schneidwerkzeug 5 in einer Seitenansicht und in einer Vorderseitenansicht. Gezeigt ist einerseits der jeweilige Einsteckschaft 6 sowie der daran anschließende Schneidfortsatz 7. Wie die Figuren zeigen, ist jeder Einsteckschaft 6 einerseits mit einer entsprechenden teilzylindrischen Schaftfläche 17 ausgeführt, die der Geometrie der Bohrungsabschnitte 15 der Einsteckaufnahmen 4 entspricht. An die jeweiligen teilzylindrischen Schaftflächen 17 schließen sich die beiden ebenen Schaftflächen 14 an, die den Winkel β zwischen sich bilden, wie bereits bezüglich Fig. 5 beschrieben.

Eine Aufsicht auf die Anordnung der drei Schneidwerkzeuge gemäß dem Ausführungsbeispiel aus Fig. 5 ist in Fig. 8 gezeigt. Dargestellt sind auch die jeweiligen Schneidabschnitte 8 in Form der jeweiligen Schneidkanten, die zwischen sich den Aufnahmeraum 9 begrenzen.

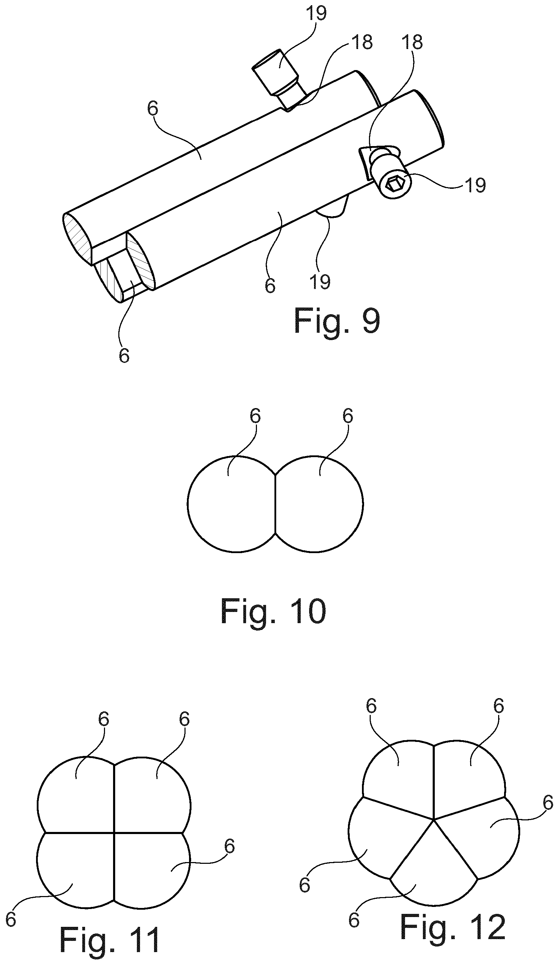

Fig. 9 zeigt in einer Teilansicht die drei Schneidwerkzeuge 5 mit ihren Einsteckschäften 6 in der Montagestellung, wobei aus Übersichtlichkeitsgründen das Haltebauteil nicht gezeigt ist. Jeder Einsteckschaft 6 weist eine ebene Anlauffläche 18 auf, benachbart zu welcher in der Einsetzstellung die jeweilige Gewindebohrung 11 mündet. Gezeigt sind ferner die jeweiligen Halteschrauben 19, die in die jeweiligen Gewindebohrungen 11 eingeschraubt werden und die gegen die Anlaufflächen 18 laufen. Die Anlaufflächen 18 verlaufen ebenfalls unter einem Winkel zur Rotationsachse R, wobei der entsprechende Winkel letztlich dem Winkel α entspricht, unter dem die Gewindebohrungen 11 geneigt sind, so dass jede Halteschraube 19 vertikal auf die jeweilige Anlauffläche 18 aufläuft. Hierüber wird zum einen eine Verriegelung in Axialrichtung realisiert, das heißt, dass eine axiale Bewegung durch die angelaufenen Halteschrauben 19 vollständig ausgeschlossen ist. Darüber hinaus wird durch diese Schrägstellungen sowohl der Gewindebohrungen 11 als auch der Anlaufflächen 18 eine axiale Kraftkomponente in Richtung des jeweiligen Bodens 13 der Einsteckaufnahmen 4 sowie eine radiale Kraftkomponente in Richtung der Endkanten 16 erzeugt, so dass die Einsteckschäfte 6 durch das Verschrauben sowohl axial gegen die Bodenflächen 13 als auch radial gegen die Endkanten 16 gespannt werden.

Zum Bestücken des Haltebauteils 3 sind lediglich die drei Schneidwerkzeuge 5 mit ihren Einsteckschäften 6 in den entsprechenden Einsteckaufnahmen 4 einzustecken. Eine Fehlpositionierung ist aufgrund der gegebenen Formkompatibilität der Querschnitte der Einsteckschäfte 6 und der Querschnitte der Einsteckaufnahmen 4 ausgeschlossen. Die mit minimalem Spiel in den Einsteckaufnahmen 4 aufgenommenen Einsteckschäfte 6 werden sodann verspannt, indem auf einfache Weise die jeweiligen Halteschrauben 19 in den Gewindebohrungen 11 verschraubt und gegen die Einsteckschäfte 6 geschraubt werden, worüber simultan sowohl die radiale Verspannung in Richtung der Rotationsachse gegen die Endkanten 16 der Einsteckaufnahmen 4 respektive der Bohrungsabschnitte 15 erfolgt, sowie die axiale Verspannung gegen den jeweiligen Boden 13 der Einsteckaufnahmen 4. Dadurch, dass sämtliche Einsteckaufnahmen 4 sowie deren Geometrien rotationssymmetrisch und vorzugsweise äquidistant verteilt zur Rotationsachse sind, sind folglich die Schneidabschnitte 8, also die jeweiligen spanabhebend am Werkstück angreifenden Schneidkanten mit Verspannen der Schneidwerkzeuge 5 automatisch exakt bezüglich einander positioniert. Die ebenen Flächen 14 der Einsteckschäfte 6 kommen hierbei nicht miteinander in Kontakt, da die Einsteckschäfte 6 wie beschrieben an den Endkanten 16, also den entsprechenden Spannabschnitten jeder Einsteckaufnahme 4 respektive jedes Bohrungsabschnitts 15, radial abgestützt sind. Es verbleibt ein minimales Spiel von nur wenigen hundertstel Millimetern.

Im gezeigten Beispiel sind am Haltebauteil 3 drei Einsteckaufnahmen 4 zur Halterung von drei Schneidwerkzeugen 5 vorgesehen. Die Figuren 10, 11 und 12 zeigen Ausführungsformen, die unterschiedliche Anzahlen an Einsteckaufnahmen 4 und damit an Schneidwerkzeugen 5 dem Prinzip nach darstellen. Gezeigt sind jeweils die Einsteckschäfte 6 sowie deren Geometrie im Querschnitt, wobei diese Querschnittsgeometrie die gleiche Querschnittsgeometrie der jeweils zugeordneten Einsteckaufnahme 4 ist.

Im Beispiel gemäß Fig. 10 sind zwei Einsteckaufnahmen 4 und demzufolge zwei Schneidwerkzeuge 5 am Haltebauteil 3 positionierbar. Die Einsteckaufnahmen 4 liegen auf gleichem Teilkreis um 180° versetzt um die Rotationsachse R. Jeder Einsteckschaft 6 ist im Wesentlichen zylindrisch, die einander zugewandten Flächen sind auch hier eben. Auch hier ist ein Umschlingungswinkel der Einsteckaufnahmen 4 respektive der Bohrungsabschnitte 15 um mehr als 180° gegeben, so dass die jeweiligen Endkanten 16 der jeweiligen Bohrungsabschnitte 15 wiederum die Spannabschnitte, gegen die die Einsteckschäfte 6 gespannt werden, bilden.

Beim Ausführungsbeispiel gemäß Fig. 11 sind vier Einsteckaufnahmen 4 für vier Schneidwerkzeuge 5 gezeigt. Die Einsteckschäfte 6 weisen wiederum entsprechende formkompatible, teilzylindrische Schaftflächen auf, die jeweils in zwei unter einem Winkel von 90° zueinander stehenden Stützflächen übergehen, mit denen im gezeigten Beispiel die Einsteckschäfte 6 gegeneinander abgestützt sind, da hier ein Umschlingungswinkel von weniger als 180° gegeben ist. Hier stützen also die Einsteckschäfte 6 einander unmittelbar ab. Aufgrund des äußerst geringen Spiels von nur wenigen einhundertstel Millimetern ist auch in diesem Fall eine exakte Positionierung aller Schneidwerkzeuge 5 zueinander ohne weiteres möglich.

Fig. 12 zeigt schließlich eine Ausführungsvariante mit fünf Einsteckaufnahmen 4 für fünf Schneidwerkzeuge 5, bei denen wiederum eine entsprechende formkompatible Geometrie zu den jeweiligen Einsteckaufnahmen 4 am Einsteckschaft 6 gegeben ist. Die ebenen Stützflächen weisen hier einen Winkel von 72° zueinander auf und stützten auch hier einander ab, da aufgrund des kleineren Umschlingungswinkels keine als Spannflächen dienende Endkanten gegeben sind .

## Patentansprüche

1. Werkzeughalter für eine Werkzeugmaschine, mit einem um eine Rotationsachse (R) drehbaren Haltebauteil (3), an dem ein Schneidwerkzeug (5) lösbar befestigt oder befestigbar ist, **dadurch gekennzeichnet, dass** das Haltebauteil (3) wenigstens zwei, in Umfangsrichtung um die Rotationsachse (R) versetzt angeordnete, Einsteckaufnahmen (4) zur Aufnahme je eines einen länglichen Einsteckschafts (6) und einen Schneidabschnitt (8) aufweisenden Schneidwerkzeugs (5) aufweist, wobei jedes Schneidwerkzeug (5) über ein separates Haltemittel (19) in der Einsteckaufnahme (4) fixiert oder fixierbar ist, und wobei die Schneidwerkzeuge (5) zwischen sich einen Aufnahmeraum (9) für ein von den Schneidwerkzeugen (5) gemeinsam zu bearbeitendes Werkstück begrenzen und mit ihren Schneidabschnitten (8) dem Aufnahmeraum (9) zugewandt sind.

2. Werkzeughalter nach Anspruch 1, **dadurch gekennzeichnet, dass** drei, vorzugsweise äquidistant um 120° in Umfangsrichtung versetzt angeordnete, Einsteckaufnahmen (4) oder vier, vorzugsweise äquidistant um 90° in Umfangsrichtung versetzt angeordnete, Einsteckaufnahmen (4) vorgesehen sind.

3. Werkzeughalter nach Anspruch 1 oder 2, **dadurch gekennzeichnet, dass** jede Einsteckaufnahme (4) über wenigstens einen Spannabschnitt begrenzt ist, gegen den der Einsteckschaft (6) des jeweiligen Schneidwerkzeugs (5) über das Haltemittel (19) gespannt oder spannbar ist, oder dass die Einsteckschäfte (6) gegeneinander über die Haltemittel (19) verspannt sind.

4. Werkzeughalter nach einem der vorangehenden Ansprüche, **dadurch gekennzeichnet, dass** die Einsteckaufnahmen (4) zur Rotationsachse (R) hin unter Bildung einer gemeinsamen Vertiefung (10) ineinander übergehen.

5. Werkzeughalter nach Anspruch 4, **dadurch gekennzeichnet, dass** die Vertiefung (10) zur Bildung der jeweiligen Einsteckaufnahme (4) eine radiale Erweiterung zur Außenseite des Haltebauteils (3) hin aufweist.

6. Werkzeughalter nach Anspruch 5, **dadurch gekennzeichnet, dass** der Querschnitt der Erweiterung formkompatibel zu einem Querschnittsabschnitt des Schneidwerkzeugs (5) ist.

7. Werkzeughalter nach Anspruch 6, **dadurch gekennzeichnet, dass** jede radiale Erweiterung über einen Bohrungsabschnitt (15) gebildet ist.

8. Werkzeughalter nach Anspruch 7, **dadurch gekennzeichnet, dass** jeder Bohrungsabschnitt (15) sich über mehr als 180° erstreckt und die Endkanten (16) jedes Bohrungsabschnitts (15) die Spannabschnitte, gegen die der jeweilige, mit dem Bohrungsabschnitt (15) im Querschnitt formkompatible Einsteckschaft (6) über das Haltemittel (19) spannbar ist, bilden.

9. Werkzeughalter nach einem der Ansprüche 4 bis 7, **dadurch gekennzeichnet, dass** jeder Einsteckschaft wenigstens eine, vorzugsweise zwei unter einem Winkel zueinander stehende Stützflächen aufweist, über die die Einsteckschäfte radial gegeneinander verspannt und abgestützt sind.

10. Werkzeughalter nach einem der vorangehenden Ansprüche, **dadurch gekennzeichnet, dass** am Haltebauteil (3) eine der Anzahl an Einsteckaufnahmen (4) entsprechende Anzahl an Gewindebohrungen (11) vorgesehen ist, die jeweils an einer Außenfläche des Haltebauteils (3) und einer Einsteckaufnahme (4) münden, und in die jeweils ein Haltemittel in Form einer gegen den Einsteckschaft (6) laufenden Halteschraube (19) eingeschraubt oder einschraubbar ist.

11. Werkzeughalter nach Anspruch 10, **dadurch gekennzeichnet, dass** jede Gewindebohrung (11) unter einem Winkel (α) < 90° zur Rotationsachse (R) verläuft.

12. Werkzeughalter nach Anspruch 10 oder 11, **dadurch gekennzeichnet, dass** an jedem Einsteckschaft (6) eine ebene Anlauffläche (18) vorgesehen ist, gegen die die Halteschraube (19) senkrecht anläuft.

13. Werkzeughalte nach Anspruch 12, **dadurch gekennzeichnet, dass** jede Gewindebohrung (11) an der Außenfläche an einer ebenen Einschraubfläche (12) mündet.

14. Werkzeughalter nach einem der Ansprüche 10 bis 13, **dadurch gekennzeichnet, dass** die Gewindebohrung (11) eine Senkbohrung ist.

15. Werkzeughalter nach einem der vorangehenden Ansprüche, **dadurch gekennzeichnet, dass** die Schneidabschnitte (8) der Schneidwerkzeuge (5) zum Überdrehen eines stiftartigen Werkstücks zur Ausbildung einer zylindrischen Werkstückoberfläche ausgebildet sind.

16. Werkzeugmaschine, umfassend eine Antriebseinrichtung mit einem um eine Rotationsachse drehbaren Aufnahmemittel sowie einen in dem Aufnahmemittel aufgenommenen oder aufnehmbaren Werkzeughalter (1) nach einem der vorangehenden Ansprüche, dessen Rotationsachse (R) mit der Rotationsachse der Aufnahme zusammenfällt.
